# EUROPÄISCHE PATENTSCHRIFT

(11) **EP 3 702 665 B1**
(45) Veröffentlichungstag und Bekanntmachung des Hinweises auf die Patenterteilung: **14.12.2022**
(21) Anmeldenummer: 19160229.1
(22) Anmeldetag: 01.03.2019
(51) Int. Cl.: F21S 43/20, F21W 103/60

(54) **BODENPROJEKTIONSEINRICHTUNG FÜR EIN KRAFTFAHRZEUG**
FLOOR PROJECTION DEVICE FOR A MOTOR VEHICLE
DISPOSITIF DE PROJECTION AU SOL POUR UN VÉHICULE AUTOMOBILE

(43) Veröffentlichungstag der Anmeldung: 02.09.2020
(73) Patentinhaber: ZKW Group GmbH, 3250 Wieselburg (AT)
(72) Erfinder: Stöger, Bernhard, 3250 Wieselburg (AT); Eichinger, Bernd, 3375 Krummnussbaum (AT)
(74) Vertreter: Patentanwaltskanzlei Matschnig & Forsthuber OG

(56) Entgegenhaltungen:
- EP-A1- 1 703 198
- EP-A2- 2 587 125
- EP-A2- 2 623 370
- EP-B1- 1 703 198
- DE-A1-102015 201 764
- US-A1- 2008 310 166
- US-A1- 2011 320 024

## Beschreibung

Die Erfindung bezieht sich auf eine Bodenprojektionseinrichtung für ein Kraftfahrzeug, umfassend zumindest zwei Einzelleuchten, zum Erzeugen einer aus zumindest zwei zusammenhängenden Teilprojektionen bestehenden Bodenprojektion im Nahbereich des Kraftfahrzeuges.

Unter "Nahbereich des Kraftfahrzeuges" ist im Zusammenhang mit der vorliegenden Erfindung ein Bereich zu verstehen, der in der Größenordnung der Fahrzeugabmessungen liegt und sich dadurch von jenen Bereichen unterscheidet, welche der Reichweite eines üblichen Abblendlichtes oder Fernlichtes entsprechen. Ein typischer Nahbereich der gegenständlichen Art liegt zwischen 1 bis 5 Meter.

Bodenprojektionen sind Leuchteffekte, beispielsweise in Form von auf den Boden projizierten Streifen, welche erzeugt werden, um beispielsweise eine verbesserte Interaktion zwischen einem Fahrzeug und anderen Verkehrsteilnehmern zu erreichen oder um dem Fahrer eines Kraftfahrzeuges eine Signalisierung, beispielsweise in Form einer Sicherheitsmarkierung, zu geben, die er vor sich, seitlich oder hinter dem Fahrzeug, gegebenenfalls kameraunterstützt, z.B. als einzuhaltender Sicherheitsbereich, wahrnehmen kann.

Um geschlossene Muster größerer Ausdehnung zu erzeugen, ist es bekannt geworden, zwei oder mehr Einzelleuchten zu verwenden, deren Muster sich auf dem Boden zu einem einzigen Muster, beispielsweise in Halbkreisform zusammensetzen. EP 2 623 370 A2 stellt eine Bodenprojektionseinrichtung mit torischer Linse dar**.**

Ein Problem der bekannten Bodenprojektionseinrichtungen besteht darin, dass bei Verwendung torischer Linsen, die sich nicht zuletzt aus Kostengründen und deren optischen Eigenschaften als Einzellinsen anbieten, im Übergangsbereich der Einzelprojektionen eine Inhomogenität entsteht, sodass die zusammengesetzte Bodenprojektion nicht als Einheit wahrgenommen wird.

Eine Aufgabe der Erfindung liegt darin, dieses Problem zu beseitigen, um zu einem homogenen Gesamtbild der Bodenprojektion zu gelangen.

Diese Aufgabe wird mit einer Bodenprojektionseinrichtung nach Anspruch 1 gelöst.

Dank der erfindungsgemäßen Modifikation einer idealen torischen Linse ergibt sich für das Auge ein wesentlich verbessertes, nicht mehr als störend empfundenes Zusammenfügen der Teillichtbilder, die auch ohne sichtbaren Knick ineinander übergehen. Man erhält ein für das Auge sehr ansprechendes Gesamtbild der Bodenprojektion, welches für den Betrachter keine als störend empfundene Inhomogenitäten erhält.

Dabei ist es zweckmäßig, wenn die Neigung der Lichteintrittsfläche jeder Einzellinse zu zumindest einer Endfläche der Linse hin zunehmend größer wird.

Um in dem Übergangsbereich der Einzelprojektionen ein weicheres Bild zu erhalten, wird erfindungsgemäß in zumindest einem seitlichen Randbereich jeder Einzellinse der äußere Radius der Einzellinse vergrößert, sodass das Licht der Lichtquelle in diesem Bereich über einen größeren Winkelbereich verteilt wird und insgesamt für das Auge eines Betrachters ein gefälligeres Lichtbild vorliegt, da verbleibende Inhomogenitäten im Bereich des Zusammenfügens nicht mehr "hart" wahrgenommen werden.

Eine zweckmäßige Weiterbildung der Erfindung zeichnet sich weiters dadurch aus, dass die Lichtquelle zumindest eine LED zum Erzeugen zumindest einer gekrümmten Linie in der Bodenprojektion aufweist.

Besonders vorteilhaft ist es außerdem, wenn die Lichtquelle zumindest zwei in Höhenrichtung versetzt liegende LEDs zum Erzeugen von zumindest zwei, im Wesentlichen parallel zueinander verlaufender gekrümmter Linien in der Bodenprojektion aufweist Es kann weiters vorgesehen sein, dass die Linse Mikrostrukturen zum Verschmieren harter Begrenzungen aufweist, wobei deren Tiefe in der Größenordnung von 10 Mikrometer liegt. Solche Strukturen sind bei Beleuchtungseinrichtungen für Kraftfahrzeuge bekannt, im vorliegenden Fall verbessern sie in vorteilhafter Weise den Gesamteindruck der Bodenprojektion.

Die Erfindung samt weiteren Vorteilen ist im Folgenden an Hand beispielsweiser Ausführungsformen in der Zeichnung näher erläutert, welche einerseits auf den Stand und andererseits auf die Erfindung Bezug nimmt. In dieser zeigen
Fig. 1 schematisch das Abstrahlverhalten einer Einzelleuchte zum Erzeugen einer Bodenprojektion auf der Fahrbahn,
Fig. 2a und 2b vereinfacht die von einerzwei Einzelleuchten mit einer Lichtquelle erzeugten Bodenprojektionen ohne und mit erfindungsgemäßer Modifizierung,
Fig. 3 in schematischer Draufsicht die Frontpartie eines Kraftfahrzeuges mit einer vor diesem erzeugten gewünschten und schematisch idealisierten Bodenprojektion,
Fig. 4 in einer Darstellung entsprechend Fig. 1 eine realistische Darstellung einer Bodenprojektion, die durch zwei Einzelleuchten mit idealen torischen Linsen erzeugt wird und unerwünschte Inhomogenitäten aufweist,
Fig. 5 eine Vorderansicht einer möglichen Ausführungsform einer Einzelleuchte für eine Bodenprojektionseinrichtung nach der Erfindung,
Fig. 6 einer Vorderansicht der Einzelleuchte der Fig. 3, durch die Linse gesehen,
Fig. 7 eine perspektivische Ansicht der Einzelleuchte der Fig. 3,
Fig. 8 in einer Explosionsdarstellung die wesentlichen Einzelteile einer Einzelleuchte der Fig. 3,
Fig. 9 eine erfindungsgemäß modifizierte torische Linse einer Einzelleuchte für eine Bodenprojektionseinrichtung nach der Erfindung in perspektivischer Ansicht, schräg von vorne gesehen,
Fig. 10 eine Unteransicht der Linse der Fig. 7,
Fig. 11 eine Seitenansicht der Linse der Fig. 7,
Fig. 12 die Linse der Fig. 7 in perspektivischer Ansicht, schräg von hinten gesehen,
Fig. 13 in einer vergrößerten Unteransicht die Modifizierung gegenüber einer idealen torischen Linse,
Fig. 14 einen schematischen Schnitt mit Strahlengängen in einem Endbereich der Linse,
Fig. 15 in schematischen Einzeldarstellungen eine mögliche Änderung des äußeren Radius der torischen Linse nach der Erfindung in Abhängigkeit von dem Winkel und
Fig. 16 eine realistische Darstellung einer Bodenprojektion, die durch zwei Einzelleuchten einer erfindungsgemäßen Bodenprojektionseinrichtung mit entsprechend modifizierten torischen Linsen erzeugt wird.

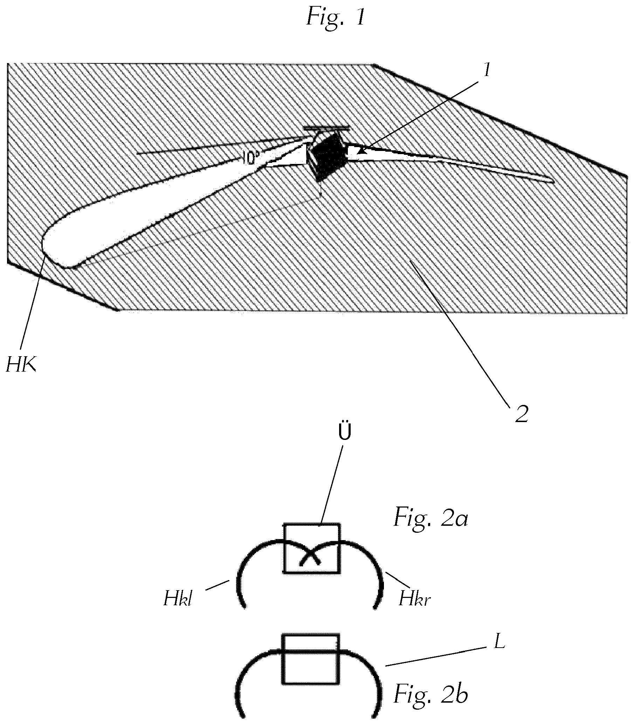

**Fig. 1** zeigt das Abstrahlverhalten einer Einzelleuchte **1**, welche weiter unten näher dargestellt ist, unter der Annahmen dass sie eine ideale torische Linse für das Licht einer ihr zugeordneten annähernd punktförmigen Lichtquelle, z.B. einer LED, besitzt. Die Abstrahlcharakteristik ist kegelförmig und die Einzelleuchte 1 richtet das Licht, wenn sie sich in üblicher Einbaulage befindet, nämlich mit im Wesentlichen horizontal verlaufenden oberen und unteren Endflächen der torischen Linse, unter einem Winkel von z.B. 10° gegen eine Horizontalebene geneigt, auf die Fahrbahn, auf welcher sie eine Bodenprojektion **2** in Form eines Halbkreises **HK** erzeugt.

Zwei, links und rechts z.B. an der Frontseite eines Fahrzeuges angeordnete derartige Einzelleuchten erzeugen demnach zwei Halbkreise **HKl** und **HKr,** beispielsweise wie in **Fig. 2a** dargestellt. Hier überschneiden die beiden Halbkreise einander in einem Übergangsbereich Ü und ergeben eine Bodenprojektion, die für einen Betrachter nicht nur unästethisch sondern auch verwirrend wirken kann. Daher hat es sich die Erfindung zum Ziel gesetzt, den Übergang zwischen den Bodenprojektionen zweier (oder auch mehrerer Einzelleuchten) harmonischer bzw. stetiger zu gestalten, beispielsweise wie vereinfacht in **Fig. 2b** dargestellt, bei welcher die gesamte Bodenprojektion eine einzige, zusammenhängende gekrümmte Linie L enthält.

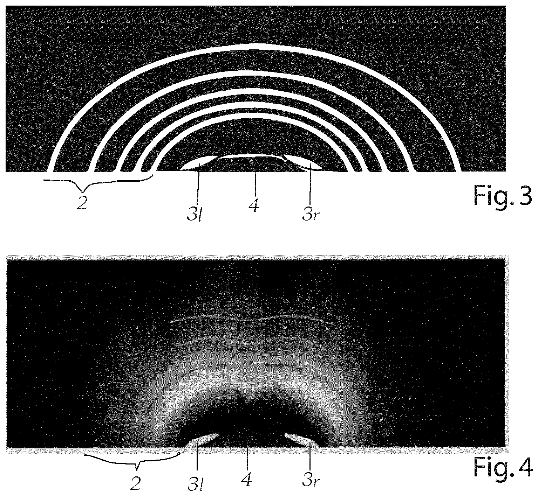

In der Praxis werden oft mehrere Lichtquellen, insbesondere LEDsn in jeder Einzelleuchte verwendet, um im Wesentlichen konzentrische Kreise in der Bodenprojektion zu erzeugen. So zeigt **Fig. 3** schematisch eine mögliche gewünschte Bodenprojektion **2,** welche von zwei Einzelleuchten **3l, 3r,** hier Frontscheinwerfern oder Leuchtmodulen eines Frontscheinwerfers eines Kraftfahrzeuges 4, in einem Abstand von beispielsweise ein bis fünf Metern von der Frontpartie des Kraftfahrzeuges 4 erzeugt werden sollte. Der Einfachheit halber ist hier nur die genannte Frontpartie des Fahrzeuges 4 dargestellt. Im vorliegenden Beispiel zeigt die Bodenprojektion fünf annähernd elliptische Linien, welche sich weitgehend parallel oder konzentrisch zueinander über 180° vor dem Fahrzeug 4 erstrecken. In der Praxis weicht das Bild der Bodenprojektion von dieser idealisierten Darstellung ab, wobei die Linien verschwommen sind und diffuse Lichtbereiche vor und hinter den Linien auftreten werden.

Wie bereits erwähnt, kann eine Bodenprojektion aus zwei Einzelprojektionen der Einzelleuchten 31, 3r zusammengesetzt werden, wozu sich torische Linsen anbieten. Durch eine besondere Ausbildung bzw. Strukturierung der Linsen entsteht die als Beispiel genannte Linienstruktur der Bodenprojektion, wobei auch die Geometrie der Lichtquelle Einfluss auf das tatsächliche Bild der Bodenprojektion hat. Im vorliegenden Fall sind fünf LEDs vorgesehen, welche übereinanderliegen und die gezeigten fünf Kreislinien zur Folge haben.

Bei Verwendung üblicher, sozusagen idealer torischer Linsen, welche in jeder Einzelleuchte einer Lichtquelle nachgeordnet sind, erhält man allerdings, wie bereits in Zusammenhang mit Fig. 2a gezeigt, ein zusammengesetztes Bild, mit einem systembedingten inhomogenen Bereich, der sich vor dem Fahrzeug befindet, bzw. an einer anderen Stelle, falls die Einzelleuchten nicht an der Frontseite sondern beispielsweise heckseitig angeordnet sind.

**Fig. 4** zeigt eine realistische Darstellung einer Bodenprojektion 2, die durch zwei Einzelleuchten 31, 3r mit idealen torischen Linsen erzeugt wird. Man erkennt deutlich den inhomogenen Bereich in der Mitte vor dem Kraftfahrzeug 4 und eine Linienstruktur mit helleren und dunkleren Bereichen. Um diesen Nachteil zu beseitigen, greift die Erfindung zu besonders ausgebildeten torischen Linsen, die weiter unten beschrieben werden.

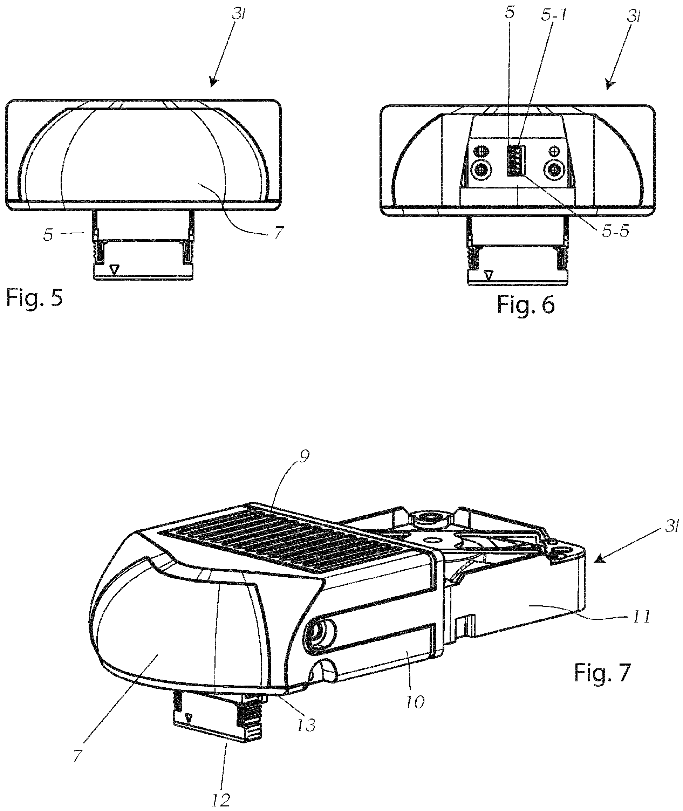

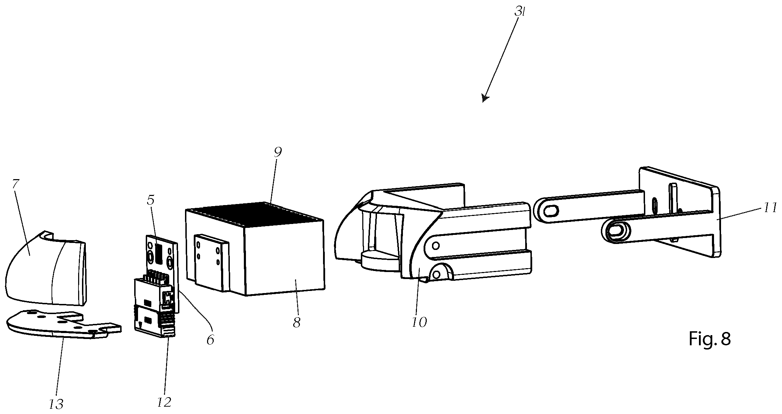

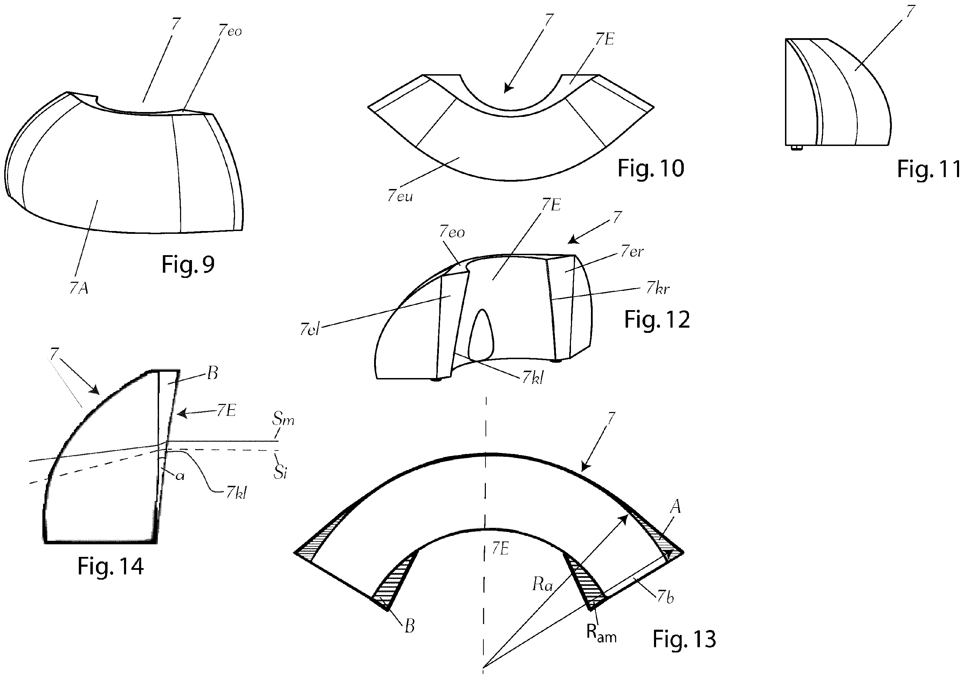

Den **Fig. 5 bis 8** kann der beispielsweisen Aufbau einer Einzelleuchte 21 entnommen werden, welche für die Realisierung der Erfindung zum Einsatz kommen kann. Die lichttechnisch wesentlichen Teile sind einerseits eine Lichtquelle **5,** ausgebildet als ein LED-Satz, der ein oder mehrere LEDs umfassen kann und auf einer Leiterplatte **6** sitzt, und andererseits eine Einzellinse **7,** welche als modifizierte torische Linse ausgestaltet ist. Ein erstes Gehäuseteil **8** mit einem Kühlkörper **9** nimmt die Leiterplatte 6 mit der Lichtquelle 5 auf. Die Lichtquelle 5 besitzt hier (Fig. 6) fünf übereinander liegende einzelne LEDs **5-1...5-5.** Ein stabiles Gehäuse **10** ist sodann für die Linse 7 und das erste Gehäuseteil 8 samt Leiterplatte 6 und Lichtquelle 5 vorgesehen, wobei eine gabelartige Halterung **11** seitlich in das Gehäuse 10 eingreift und dieses trägt. An der Leiterplatte 6 ist noch eine Steckvorrichtung **12** angeordnet, über welche die Lichtquelle mit Strom versorgt wird. Die Linse 7 ist auf einer Unterlage **13** abgestützt. Die Fig. **9 bis 14** zeigen eine torische Linse 7 einer erfindungsgemäßen Bodenprojektionseinrichtung, wobei diese Linse gegenüber einer idealen torischen Linse modifiziert ist, sodass sie auch als atorische Linse bezeichnet werden könnte.

An der Linse 7 kann man unterschiedlichen Endflächen und Kanten erkennen, nämlich eine obere Endfläche **7eo,** eine untere Endfläche **7eu,** beide in normaler Einbaulage im wesentlichen horizontal verlaufend, eine linke und eine rechte Endfläche **7el** und **7er,** beide in normaler Einbaulage im wesentlichen vertikal verlaufend, innere Begrenzungskanten **7kl** und **7kr** der linken und rechten Endfläche 7el und 6er, eine innere Lichteintrittsfläche **7_{E}** und eine äußere Lichtaustrittsfläche **7_{A}.**

Wesentlich für die Erfindung ist, dass in zumindest einem seitlichen Randbereich der Einzellinse die Lichteintrittsfläche 7_{E} jeder Einzellinse 7 von unten nach oben verlaufend nach innen geneigt verläuft, was vor allem in den Fig. 12 und 14 ersichtlich ist. Man erkennt dies z.B. an den geneigten Kanten7kl und 7kr, die nicht vertikal verlaufen, sondern gegen die Vertikale unter einem Winkel (α) geneigt sind, der beispielsweise 10° betragen kann. Diese Neigung bewirkt eine Ablenkung eines Lichtstrahls nach oben, wie die beiden Strahlengänge Si und Sm der Fig. 14 zeigen sollen. Der Strahlengang Si entspräche jenem einer idealen (nicht dargestellten) torischen Linse, wogegen der Strahlengang Sm jenem einer erfindungsgemäß modifizierten Linse entspricht, welche dank der Neigung der Lichteintrittsfläche 7_{E} in einem oder beiden Endbereichen der Linse 7 einen zusätzlichen, im Schnitt dreieckigen Bereich B aufweist.

Außerdem ist es zweckmäßig, wenn zur Erzeugung eines für einen Betrachter gefälligeren Überganges von Einzelprojektionen in zumindest einem seitlichen Randbereich jeder Einzellinse 7 der äußere Radius **Ra** der Einzellinse vergrößert ist, sodass das Licht der Lichtquelle in diesem Bereich über einen größeren Winkelbereich verteilt wird. Dies geht aus **Fig. 13** hervor, welche den modifizierten, vergrößerten Radius **Ram** in den Endbereichen der Linse 7 zeigt, welche dort wegen des größeren Radius gegenüber einer idealen torische Linse um einen Bereich **A** verdickt sind. An den beiden seitlichen Rändern der Einzellinse 7 ist je ein Basisbereich **7b** vorhanden, welcher der idealen torischen Linse entspricht. Demgegenüber sind an der modifizierten Linse 7 nach der Erfindung an zumindestens einem Randbereich die Bereicghe A und B vorhanden, deren Entstehung oben erläutert wurde.

Ohne die schraffierten Bereiche A und B würde es sich um eine ideale torische Linse handeln, welche nur den Bereich 7b umfasst. Durch Erweiterung der idealen torischen Linse werden die von einer Lichtquelle kommenden Lichtstrahlen so abgelenkt, dass beispielsweise Linienmuster einer linken und einer rechten Einzelleuchte mehr oder weniger stetig und für das Auge angenehm ineinander übergehen.

Es soll klar sein, dass in vielen Fällen lediglich die einander zugewandten Randbereiche von zwei Einzellinsen erfindungsgemäß modifiziert sind und dass es weiters auch ausreichend sein kann, wenn eine torischen Linse lediglich dahingehend modifiziert wird, dass in zumindest einem seitlichen Randbereich jeder torischen Einzellinse die Lichteintrittsfläche von unten nach oben verlaufend nach innen geneigt verläuft.

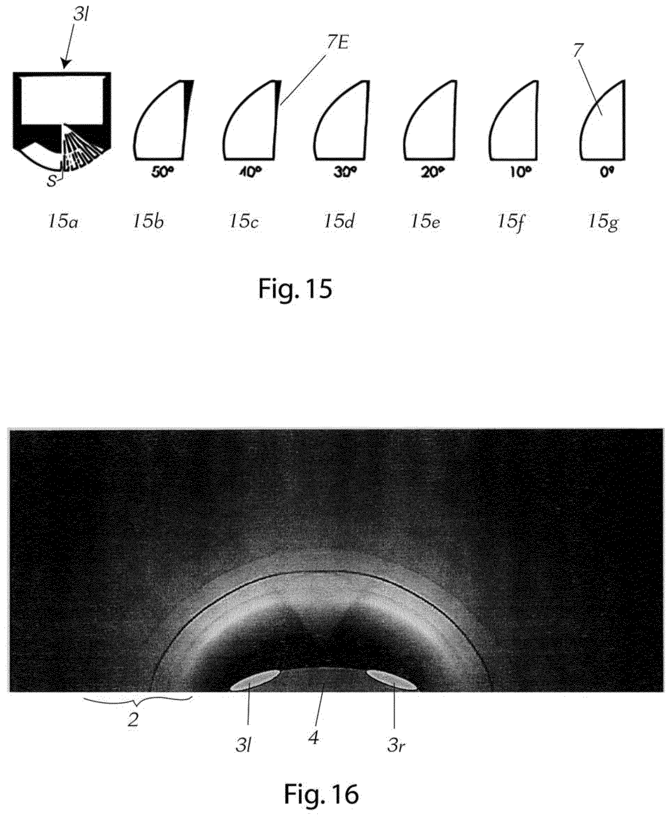

**Fig. 15** zeigt in Einzeldarstellungen eine mögliche Änderung der Neigung der Lichteintrittsfläche 7_{E} einer Einzellinse 7 in Abhängigkeit von der Winkelabweichung gegenüber der Symmetralen s einer Einzeleuchte 31, wobei diese Symmetrale in der Teilfigur 15a eingezeichnet ist und einem Winkel von 0° (zentrale optische Achse) entspricht. Bei 0° gibt es keine Abweichung von einer (idealen) torischen Linse, doch wird mit fortschreitendem Winkel die Neigung größer größer, bis hier zu einem Endwinkel von 50°. Bei einer links/rechts-symmetrischen Linse 7 gilt dies natürlich auch für den von 0° zur anderen Seite sich erstreckenden Winkel.

**Fig. 16** zeigt ein realistisches Bild einer Bodenprojektion, die mittels einer erfindungsgemäßen Bodenprojektionseinrichtung erzeugt wurde, wobei man erkennt, dass die erzeugte, aus zwei Teilprojektionen zusammengesetzte Bodenprojektion 2 ein gegenüber der Darstellung der Fig. 2 wesentlich verbessertes Bild darstellt, in dem Inhomogenitäten kaum mehr erkennbar sind.

In Hinblick auf die unterschiedlichen Ausbildungen der Bodenprojektion und der jeweiligen Anforderungen an das Erscheinungsbild ist eine geschlossene Berechnungsform für die modifizierte torische Linse nicht möglich bzw. nicht sinnvoll. Ebenso hängt die erforderliche Modifizierung von dem Abstand der beiden Einzelleuchten ab. Daher wird die beschriebene Modifizierung am zweckmäßigsten durch Projektionen verschiedener modifizierter Freiformlinsen versuchsweise ermittelt.

Um eine "harte", d.h. sehr kontrastreiche Begrenzung des projizierten Lichtbildes zu vermeiden, kann auf den Linsen 7 der Einzelleuchten 31, 3r an geeigneten Stellen, bevorzugt auf der gesamten Linsenoberfläche, zusätzlich eine an sich bekannte Strukturierung vorhanden sein, z.B. in Form von Einprägungen eines Noppenrasters, von Rillen etc., wobei die Elemente solche Strukturen Abmessungen typischerweise im Mikrometerbereich besitzen. Solche Mikrostrukturen können zum Verschmieren harter Begrenzungen dienen.

Es mag angemerkt sein, dass im vorliegenden Beispiel die torischen Linsen der beiden Einzelleuchten 31, 3r, hier einer linken und einer rechten Einzelleuchte an der Frontpartie des Fahrzeuges 4, identisch gestaltet sind und eine links-rechts-Symmetrie aufweisen. Es kann jedoch hinreichend sein, wenn die beiden Linsen lediglich in ihren einander zugewandten Randbereichen die erfindungsgemäße Ausbildung aufweisen, um die unerwünschte Inhomogenität in der Mitte vor dem Fahrzeug auszugleichen. Andererseits sollte es klar sein, dass die Erfindung nicht auf das Zusammenwirken von zwei Einzelleuchten beschränkt ist, zumal das zu lösende Problem auch auftritt, wenn man Teilprojektionen von drei oder mehr Einzelleuchten zusammensetzen möchte.

Bei einer praktischen Ausführung der Linse 7 beträgt deren Höhe 20 mm und die Breite 50 mm, bei einem Winkelbereich von -65° bis + 65°, somit einem gesamten Winkel von 130°. Der Aufbau ist für zwei Module bzw. Einzelleuchten optimiert. Eine Einzelleuchte wird um 30° nach außen gedreht, ihr Winkelbereich erstreckt sich von -95° bis 35°. Mit zwei Einzelleuchten wird ein gesamter Winkelbereich von -95° bis +95° abgedeckt. Im Zentralbereich von -35° bis +35° überlagern sich die Teilprojektionen beider Einzelleuchten.

Werden die Einzelleuchten jedoch in Scheinwerfer eingebaut, so können die Module beispielsweise um etwa 30° nach außen gedreht eingebaut werden.

Streifen können auch mit deutlich kleineren Linsen, z.B. mit einer Höhe von 10 mm und einer Breite von 15 mm auf die Straße zu projiziert werden, wobei bei sehr kleinen Modulen gegebenenfalls nur ein Streifen auf den Boden projiziert wird. Die erfindungsgemäße Modifizierung der torischen Linse erstreckt sich im Prinzip über die gesamte Linsenhöhe.

### Liste der Bezugszeichen

| | | | |
|---|---|---|---|
| 1 | Einzelleuchte | A | Bereich |
| 2 | Bodenprojektion | B | Bereich |
| 31 | Einzelleuchte | HK | Halbkreis |
| 3r | Einzelleuchte | HKl | Halbkreis |
| 4 | Kraftfahrzeug | HKr | Halbkreis |
| 5 | Lichtquelle | Ra | Radius |
| 5-1 | LED | Ram | Radius |
| 5-5 | LED | S | Symmetrale |
| 6 | Leiterplatte | α | Winkel |
| 7 | Linse | | |
| 7_{A} | Lichtaustrittsfläche | | |
| 7_{E} | Lichteintrittsfläche | | |
| 7a | Bereich | | |
| 7eo | obere Endfläche | | |
| 7eu | untere Endfläche | | |
| 7el | linke Endfläche | | |
| 7er | rechte Endfläche | | |
| 7kl | innere Begrenzungskante | | |
| 7kr | innere Begrenzungskante | | |
| 8 | Gehäuseteil | | |
| 9 | Kühlkörper | | |
| 10 | Gehäuse | | |
| 11 | Halterung | | |
| 12 | Steckvorrichtung | | |
| 13 | Unterlage | | |

## Patentansprüche

1. Bodenprojektionseinrichtung für ein Kraftfahrzeug (4), umfassend zumindest zwei Einzelleuchten (31, 3r), zum Erzeugen einer aus zwei zusammenhängenden Teilprojektionen bestehenden Bodenprojektion (2) im Nahbereich des Kraftfahrzeuges,
wobei jede Einzelleuchte (31, 3r) eine Lichtquelle (5) und eine dieser vorgelagerte Einzellinse (7) besitzt, wobei jede Einzellinse (7) als torische Linse ausgebildet ist, welche eine obere Endfläche (7eo) und eine untere Endfläche (7eu), beide in normaler Einbaulage in einem Fahrzeug im Wesentlichen horizontal verlaufend, eine linke (7el) und eine rechte Endfläche (7er), beide in normaler Einbaulage in einem Fahrzeug im Wesentlichen vertikal verlaufend, eine innere Begrenzungskante (7kl) der linken Endfläche (7el) und eine innere Begrenzungskante (7kr) der rechten Endfläche (7er), und
eine innere Lichteintrittsfläche (7E) und eine äußere Lichtaustrittsfläche (7A) aufweist, wobei die innere Lichteintrittsfläche (7E) der Lichtquelle (5) zugewandt und die Lichtaustrittsfläche (7A) der Lichtquelle (5) abgewandt ist, **dadurch gekennzeichnet, dass** in zumindest einem seitlichen Randbereich der Einzellinse die Lichteintrittsfläche (7E) der Einzellinse von unten nach oben verlaufend nach innen geneigt verläuft, sodass die Begrenzungskanten (7kl) und (7kr) nicht vertikal verlaufen, sondern gegen eine Vertikale unter einem Winkel (α), zur Lichtquelle (5) hin, geneigt sind,
und, dass in zumindest einem seitlichen Randbereich, welcher von der entsprechenden linken Begrenzungskante (7kl) beziehungsweise rechten Begrenzungskante (7kr) begrenzt ist, jeder Einzellinse (7) der äußere Radius (Ra) der Einzellinse vergrößert ist, sodass das Licht der Lichtquelle (5) in diesem Bereich über einen größeren Winkelbereich verteilt wird.

2. Bodenprojektionseinrichtung nach Anspruch 1, **dadurch gekennzeichnet, dass** die Neigung der Lichteintrittsfläche (7E) jeder Einzellinse (7) zu zumindest einer Endfläche (7el, 7er) der Linse hin zunehmend größer wird.

3. Bodenprojektionseinrichtung nach einem der Ansprüche 1 bis 2, **dadurch gekennzeichnet, dass** die Lichtquelle (5) zumindest eine LED (5-1...5-5) zum Erzeugen zumindest einer gekrümmten Linie in der Bodenprojektion aufweist.

4. Bodenprojektionseinrichtung nach einem der Ansprüche 1 bis 2, **dadurch gekennzeichnet, dass** die Lichtquelle (5) zumindest zwei in Höhenrichtung versetzt liegende LEDs (5-1...5-5) zum Erzeugen von zumindest zwei, im Wesentlichen parallel zueinander verlaufender gekrümmter Linien in der Bodenprojektion aufweist.

5. Bodenprojektionseinrichtung nach einem der Ansprüche 1 bis 4, **dadurch gekennzeichnet, dass** die Einzellinse (7) Mikrostrukturen zum Verschmieren harter Begrenzungen aufweist.

## Claims

1. Ground projection device for a motor vehicle (4), comprising at least two individual lamps (3l, 3r), for generating a ground projection (2) consisting of two coherent partial projections in the near area of the motor vehicle,
each individual lamp (3l, 3r) having a light source (5) and an individual lens (7) mounted in front of the latter, each individual lens (7) being designed as a toric lens which has an upper end face (7eo) and a lower end face (7eu), both running essentially horizontally in the normal installation position in a vehicle, a left end face (7el) and a right end face (7eu), both running essentially horizontally in the normal installation position in a vehicle, and a right end face (7eu), both running essentially horizontally in the normal installation position in a vehicle, a left end surface (7el) and a right end surface (7er) both extending substantially vertically in a normal mounting position in a vehicle, an inner boundary edge (7kl) of the left end surface (7el) and an inner boundary edge (7kr) of the right end surface (7er) and an inner light entrance surface (7E) and an outer light exit surface (7A), wherein the inner light entrance surface (7E) faces the light source (5) and the light exit surface (7A) faces away from the light source (5), **characterized in that** in at least one lateral edge region of the individual lens the light entrance surface (7E) of the individual lens runs from the bottom to the top and is inclined inwardly, so that the boundary edges (7kl) and (7kr) do not run vertically, but are inclined against a vertical at an angle (α) towards the light source (5),
and **in that**
in at least one lateral edge region, which is bounded by the corresponding left boundary edge (7kl) and right boundary edge (7kr), respectively, of each individual lens (7), the outer radius (Ra) of the individual lens is enlarged, so that the light of the light source (5) is distributed in this region over a larger angular range.

2. Ground projection device according to claim 1, **characterized in that** the inclination of the light entrance surface (7E) of each individual lens (7) towards at least one end surface (7el, 7er) of the lens becomes increasingly larger.

3. Ground projection device according to one of the claims 1 to 2, **characterized in that** the light source (5) comprises at least one LED (5-1...5-5) for generating at least one curved line in the ground projection.

4. Ground projection device according to one of the claims 1 to 2, **characterized in that** the light source (5) has at least two LEDs (5-1...5-5) offset in the height direction for generating at least two curved lines running essentially parallel to one another in the ground projection.

5. Ground projection device according to one of the claims 1 to 4, **characterized in that** the single lens (7) has microstructures for smearing hard boundaries.

## Revendications

1. Dispositif de projection au sol pour un véhicule automobile (4), comprenant au moins deux feux individuels (3l, 3r), pour générer une projection au sol (2) composée de deux projections partielles cohérentes dans la zone proche du véhicule automobile,
chaque feu individuel (3l, 3r) possédant une source lumineuse (5) et une lentille individuelle (7) placée devant celle-ci, chaque lentille individuelle (7) étant conçue comme une lentille torique qui présente une surface d'extrémité supérieure (7eo) et une surface d'extrémité inférieure (7eu), toutes deux s'étendant sensiblement horizontalement en position de montage normale dans un véhicule, une surface d'extrémité gauche (7el) et une surface d'extrémité droite (7er), toutes deux s'étendant sensiblement verticalement dans une position de montage normale dans un véhicule, un bord de délimitation intérieur (7kl) de la surface d'extrémité gauche (7el) et un bord de délimitation intérieur (7kr) de la surface d'extrémité droite (7er), et une surface intérieure d'entrée de la lumière (7E) et une surface extérieure de sortie de la lumière (7A), la surface intérieure d'entrée de la lumière (7E) étant tournée vers la source de lumière (5) et la surface de sortie de la lumière (7A) étant tournée à l'opposé de la source de lumière (5), **caractérisé, en ce que**, dans au moins une zone marginale latérale de la lentille unique, la surface d'entrée de lumière (7E) de la lentille unique s'étend de bas en haut en étant inclinée vers l'intérieur, de sorte que les arêtes de délimitation (7kl) et (7kr) ne s'étendent pas verticalement, mais sont inclinées par rapport à une verticale sous un angle (α), vers la source de lumière (5),
et **en ce que**
dans au moins une zone marginale latérale, qui est délimitée par le bord de délimitation gauche (7kl) ou le bord de délimitation droit (7kr) correspondant, de chaque lentille individuelle (7), le rayon extérieur (Ra) de la lentille individuelle est agrandi, de sorte que la lumière de la source lumineuse (5) est répartie dans cette zone sur une plus grande plage angulaire.

2. Dispositif de projection au sol selon la revendication 1, **caractérisé en ce que** l'inclinaison de la surface d'entrée de lumière (7E) de chaque lentille individuelle (7) est de plus en plus grande vers au moins une surface d'extrémité (7el, 7er) de la lentille.

3. Dispositif de projection au sol selon l'une des revendications 1 à 2, **caractérisé en ce que** la source lumineuse (5) comprend au moins une LED (5-1...5-5) pour générer au moins une ligne courbe dans la projection au sol.

4. Dispositif de projection au sol selon l'une des revendications 1 à 2, **caractérisé en ce que** la source lumineuse (5) comporte au moins deux LED (5-1...5-5) décalées dans le sens de la hauteur pour générer au moins deux lignes courbes sensiblement parallèles entre elles dans la projection au sol.

5. Dispositif de projection au sol selon l'une des revendications 1 à 4, **caractérisé en ce que** la lentille unique (7) présente des microstructures pour le maculage des limites dures.
